(19) Europäisches Patentamt
European Patent Office
Office européen des brevets

(11) **EP 3 944 185 A1**

(12) **EUROPEAN PATENT APPLICATION**

(43) Date of publication:
**26.01.2022 Bulletin 2022/04**

(21) Application number: **20188078.8**

(22) Date of filing: **28.07.2020**

(51) International Patent Classification (IPC):
***G06T 7/00*** *(2017.01)*

(52) Cooperative Patent Classification (CPC):
**G06T 7/0012;** G06T 2207/20084; G06T 2207/30041

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.07.2020 PT 2020116600**

(71) Applicants:
• **INESC TEC - Instituto de Engenharia de Sistemas e**
**Computadores, Tecnologia e Ciência**
**4200-465 Porto (PT)**

• **Universidade Do Porto**
**4099-002 Porto (PT)**

(72) Inventors:
• **VENDAS DA COSTA, Pedro Miguel**
**4200-465 PORTO (PT)**
• **DE CASTRO CAMPILHO, Aurélio Joaquim**
**4200-465 Porto (PT)**

(74) Representative: **Ferreira, Maria Silvina**
**Clarke, Modet & Co**
**Av. Casal Ribeiro, N°50-3° andar**
**1000-93 Lisboa (PT)**

(54) **COMPUTER-IMPLEMENTED METHOD, SYSTEM AND COMPUTER PROGRAM PRODUCT FOR DETECTING A RETINAL CONDITION FROM EYE FUNDUS IMAGES**

(57) Computer-implemented method, system and computer program product for detecting a retinal condition from eye fundus images. The method (100) comprises:

receiving (110), by an image classifier (506), one or more eye fundus images $I_i$ (102) acquired from a same eye;
applying (120) a same convolutional neuronal network (302) on each eye fundus image $I_i$ (102) to obtain a corresponding prediction $y_i$ (122);
applying (130) a pooling function (304) on the predictions $y_i$ (122) to obtain a classification $Y$ (132) of the one or more eye fundus images $I_i$ (102) defined as:

$$Y = \frac{\sum_i^N y_i y_i}{\sum_i^N y_i + \epsilon},$$

, wherein $\epsilon$ is a constant and N is the number of eye fundus images $I_i$ received; and
detecting (140) a retinal condition (142) based on the classification $Y$ (132). The image classifier is advantageously trained using only eye examination labels assigned by ophthalmologists, without requiring low-level image labels.

Fig. 1

**Description**

**FIELD**

The present invention is comprised within the field of image analysis, and more particularly, within the field of methods systems for detecting a retinal condition (such as diabetic retinopathy, age-related macular degeneration or diabetic macular edema) based on the analysis of eye fundus images.

**BACKGROUND**

Retinal and choroidal pathology, especially diabetic retinopathy (DR) and age-related macular degeneration (AMD), is the leading cause of visual loss in people of working age and older in the Western world.

While for the developed world, like the United States, the number of patients with age-related macular degeneration is estimated to be 8 million among people over 55 years old. Of these people, 1.3 million would develop advanced AMD if no treatment were given to reduce their risk. Globally, the elderly population will double by 2040. Thus, effective methods for detection of retinal and choroidal diseases are vitally important both for patient care and socioeconomic concern.

Diabetic retinopathy is an eye disease that affects more than 25% of the diabetic patients, being a leading cause of preventable blindness in the developed world. Due to the high social and economic impact of blindness, screening the entire diabetic population for signs of diabetic retinopathy is found to be cost-effective. Consequently, many diabetic retinopathy screening programs have been implemented to monitor the growing diabetic population.

The number of diabetic patients has been steadily increasing. In 2015 it was estimated that there were 415 million diabetic patients aged between 20 and 79 years, and the prevalence of diabetes is expected to grow to 642 million by 2040. This poses a great burden on ophthalmologists that need to screen an ever increasing population. A system capable of identifying signs of diabetic retinopathy and which patients require treatment would be of great importance to help ophthalmologists focus on the patient treatment.

During screening, patients are called to a medical center to acquire at least two eye fundus images per eye. These images are stored in a Picture Archiving and Communication System (PACS) where ophthalmologists can review and diagnose the patient examinations. Finally, the ophthalmologists' grading and decision is stored in the PACS.

Diabetic retinopathy can be graded in four different categories: R0 -normal, i.e. no diabetic retinopathy-, R1 -mild diabetic retinopathy-, R2 -moderate or severe diabetic retinopathy- and R3 -proliferative diabetic retinopathy-. Only patients with R2 and R3 are referred to treatment; however, it is also important to keep track of the patients that are in the early stages of diabetic retinopathy (R1). Additionally, some exams have poor quality images that do not allow the ophthalmologists to confidently diagnose the patient.

In recent years, Deep Neural Networks (DNNs) are frequently used on the field of medical data analysis. In the context of fully-supervised learning (when annotated data is available), neural networks composed of relatively many stacked layers are designed so that the provided raw data is transformed through subsequent non-linear operations into a suitable output (disease presence, pixel class, or any other quantity of interest). During training, the model iteratively updates the weights/parameters within its hidden layers, eventually finding optimal hierarchical data representations for the problem. These learned representations are built relying only on the minimization of a suitable loss function, thus by-passing the need of manual feature engineering. However, this process needs large quantities of data and suitable regularization techniques in order to converge to proper solutions that can later generalize on unseen data.

A particularly successful kind of DNN are convolutional neuronal network (CNNs), which take advantage of the strong spatial correlation of visual data by learning a set of shared weights in the form of filters. Since the success of the AlexNet architecture on the 2012 ImageNet challenge, new models have regularly appeared in the literature with steadily improving performance. From VGG to Inception or Residual Networks, the general trend has been increasing the depth of the models in order to build more expressive architectures that can learn richer data representations.

In more recent years, medical image analysis applications have also strongly benefited from these advances in computer vision. Initial applications comprise two-dimensional image classification [1], detection or segmentation problems, but the technology is quickly extending to more complicated visual data modalities, spanning from three-dimensional MRI or CT scan analysis to medical video understanding. It is worth noting that, despite the success of recent CNN architectures, notable architecture choices for CNN-based medical image analysis involving classification tasks on two-dimensional data still include standard models such as VGG, although recent large-scale medical applications [1] seem to favor Inception v3.

In the case of diabetic retinopathy classification, Gulshan et al. [1] reported comparable performance to ophthalmologists by training an Inception v3 network on a large private dataset. The authors solve the tasks of referable diabetic retinopathy detection, vision-threatening diabetic retinopathy, referable diabetic macular edema and image quality, although they avoid the most difficult task of mild-DR detection.

In the same year, a competing approach was proposed [2] that, in the meantime, was already approved by the Food and Drug Administration (FDA) for diabetic retinopathy screening. In this work, the authors train multiple CNN networks to detect if an image contains a particular lesion. Different CNN architectures were used, depending on the availability of data for each task. Then, the authors use these networks to extract features from an entire patient exam, consisting of four eye fundus images, which are then given to a random forest classifier to grade the patient. However, image annotations are required to train the lesion detectors, and patient grades are needed to train the random forest classifier.

Most existing methods do not consider patient grades at all, focusing on classifying individual images. Similarly to the work of Abramoff et al. [2], DeepSeeNet was proposed to classify patient based age-related macular degeneration by training multiple image classifiers and then fusing their results.

Another suitable solution for the lack of large data quantities are weakly-supervised learning methods. As opposed to fully-supervised methods, with weak supervision a model is trained to learn low-level information from data even if the corresponding low-level ground-truth is not available, but rather a higher-level source of information is present.

A form of weak supervision that has been particularly successful in biomedical applications is the Multiple Instance Learning (MIL) framework [3]. In MIL, instead of supplying a learning algorithm with pairs of inputs and labels, these labels are associated with sets of inputs, also known as bags. In the case of binary labels, the fundamental MIL assumption states that a positive bag (e.g. an image with signs of disease) contains at least one positive instance (e.g. a lesion).

Training MIL-based models requires only weak annotations. Traditionally, this idea was translated in practice by using only image-level labels, while still classifying images based on instance-level information, i.e. on the presence of lesions. Requiring weak annotations simplifies enormously data collection, which is a major issue in medical image analysis. However, these weaker annotations need to be compensated by larger datasets [3].

Gargeya and Leng [4] addressed the problem of detecting diabetic retinopathy, distinguishing between healthy retinas from retinas with any pathology, including mild diabetic retinopathy, using weakly-supervised methods. A residual CNN was trained on a subset of the publicly available EyePACS dataset, containing 75137 color retina fundus images. This CNN was used to extract a feature map from the images, which were subsequently supplied to a global average pooling layer followed by a fully-connected layer with a Softmax activation function to classify the image. They implemented class activation mapping (CAM) [5], a technique that simply performs a dot product between the weights of the last fully connected layer that correspond to the DR class and each of the feature vectors that are obtained before the global average pooling layer. This operation results in an activation map, where higher values corresponding to regions with higher likelihood of containing DR-related lesions.

More recently, Costa et al. [6] proposed a weakly-supervised model for the detection of diabetic retinopathy. The authors proposed a novel fully-convolutional neural network architecture to classify patches of input images while being trained with image labels alone. Patch predictions are treated as latent variables and pooled into the image prediction, where the loss is applied. The resulting model is able to find microaneurysms and small hemorrhages, the main indicators of early diabetic retinopathy, without any lesion annotations. By adapting standard pre-trained CNNs to the proposed architecture, it is possible to obtain state-of-the-art results in a medium-sized dataset.

Weakly supervised and MIL models are also useful to obtain explainable results, even when they do not follow the Standard MIL Assumption. EyeQual [7] is another weakly-supervised method for the task of classifying the quality of eye fundus images. The authors proposed a novel pooling method, the Shifted Weighted Average Pooling, that was able to discard the uninformative patches from decision. Results show that EyeQual was able to identify the bad quality patches and discard the regions outside the retina Field-of-View.

However, all the known prior-art documents need to train an image classifier using image labels (i.e. image-level labels, such as defects found on specific areas of the image). A similar problem arises when detecting other retinal conditions, such as age-related macular degeneration or diabetic macular edema (DME). It would be advisable to eliminate this requirement and develop a method for detecting a retinal condition (e.g. diabetic retinopathy, age-related macular degeneration or diabetic macular edema) in which the image classifier is no longer required to be trained using the low-level information included in the image labels, but a higher-level source of information included in the eye labels (e.g. grade of diabetic retinopathy, grade of age-related macular degeneration or grade of diabetic macular edema assigned by the ophthalmologists to the eye fundus images), since this kind of information is, unlike the image labels, greatly available in the public databases.

References

[1] V Gulshan, L Peng, M Coram, MC Stumpe, D Wu, A Narayanaswamy, S Venugopalan, K Widner, T Madams, J Cuadros, R Kim, R Raman, PC Nelson, JL Mega, and DR Webster. Development and Validation of a Deep Learning Algorithm for Detection of Diabetic Retinopathy in Retinal Fundus Photographs. JAMA, 316(22):2402, 12 2016.

[2] M D Abramoff, Y. Lou, A. Erginay, Warren Clarida, Ryan Amelon, James C. Folk, and Meindert Niemeijer. Improved Automated Detection of Diabetic Retinopathy on a Publicly Available Dataset Through Integration of Deep Learning. Investigative Opthalmology & Visual Science,57(13):5200, 2016.

[3] G Quellec, G Cazuguel, B Cochener, and M Lamard. Multiple-Instance Learning for Medical Image and Video Analysis. IEEE Reviews in Biomedical Engineering, 10:213-234, 2017.

[4] Rishab Gargeya and Theodore Leng. Automated Identification of Diabetic Retinopathy Using Deep Learning. Ophthalmology, 124(7):962-969, 2017.

[5] Bolei Zhou, Aditya Khosla, Agata Lapedriza, Aude Oliva, and Antonio Torralba. Learning Deep Features for Discriminative Localization. Pages 2921-2929, 2015.

[6] Pedro Costa, Teresa Araújo, Guilherme Aresta, Adrian Galdran, Ana Maria Mendonça, Asim Smailagic, and Aurélio Campilho. Eyewes: weakly supervised pre-trained convolutional neural networks for diabetic retinopathy detection. In 2019 16th International Conference on Machine Vision Applications (MVA), pages 1-6. IEEE, 2019.

[7] Pedro Costa, Aurelio Campilho, Bryan Hooi, Asim Smailagic, Kris Kitani, Shenghua Liu, Christos Faloutsos, and Adrian Galdran. Eyequal: Accurate, explainable, retinal image quality assessment. In 2017 16th IEEE International Conference on Machine Learning and Applications (ICMLA), pages 323-330. IEEE, 2017.

## SUMMARY

The invention relates to a computer-implemented method, a system and a computer program product for detecting a retinal condition from eye fundus images. A retinal condition is any kind of disease or pathology that affects any part of the retina. In particular, the present method may be used for detecting any of the following retinal conditions: diabetic retinopathy, age-related macular degeneration and diabetic macular edema.

The present invention refers to a novel method in which the image classifier is trained from eye labels alone, without the need of low-level image labels. With this approach, the method can access large existing datasets that result from the screening programmes in place for the training of the image classifier. The method is able to obtain comparable results to ophthalmologists in classifying not only patient eyes but also individual images.

The invention can automatically detect a retinal condition by analyzing one or more eye fundus images. The invention can also simultaneously classify multiple tasks, for instance:

- When applied to detect a condition of diabetic retinopathy, the invention may be focused on three different tasks: detect abnormal diabetic retinopathy (i.e. R1, R2 or R3 grades), detect referable diabetic retinopathy (i.e. R2 or R3 grades) and/or detect ungradable images (i.e. no grade can be assigned by the ophthalmologist). In the abnormality detection task the invention aims to separate normal images without diabetic retinopathy signs (R0 grade) from the pathological ones, even if the image is at the R1 grade, whereas in the referable detection task the invention aims to find images from patients that require treatment. Finally, in the quality detection task the invention aims to find images that are ungradable by the ophthalmologists.

- When applied to detect a condition of age-related macular degeneration (AMD), the invention may be focused on different tasks. The most common standard to categorize AMD includes 4 grades: no AMD (AMD-1), early AMD (AMD-2), intermediate AMD (AMD-3) and advanced AMD (AMD-4). Similarly to diabetic retinopathy, only intermediate AMD can be treated and, therefore, the method can be focused on two tasks: AMD detection (i.e. AMD-2, AMD-3 or AMD-4 grades) and referable AMD detection (i.e. AMD-3 or AMD-4 grades). Additionally, the quality detection task still applies for this particular problem. Therefore, the method can be used as well to detect AMD without any modification to the training procedure (it is only required to change the training dataset and grades).

- When applied to detect a condition of diabetic macular edema (DME), the invention may be focused on different tasks. DME can be divide into 3 grades: no DME (DME-0), early DME (DME-1), and referable DME (DME-2). Similarly to diabetic retinopathy and age-related macular degeneration, the method can be focused on two tasks: DME detection (i.e. DME-1 or DME-2 grades) and referable DME (DME-2 grade).

The image classifier may be trained individually for each one of the retinal conditions considered, i.e. a first training for diabetic retinopathy, a second training for age-related macular degeneration and a third training for diabetic macular edema. Alternatively, these retinal diseases can be treated as additional tasks on a multi-task setting. In this case, a same image classifier would be able to predict at the same time any of the following tasks: image quality, DR detection, DR referable, AMD detection, AMD referable, DME detection and DME referable, or a combination thereof.

However, ophthalmologists grade exams at the eye level, leaving individual eye fundus images from each eye without any annotation (i.e. there is no image label). Since all existing image aided diagnosis methods for detecting a retinal condition require image or even lesion annotations (e.g. lesions marked in the image by a radiologist), no prior-art method can be used to solve this task on existing screening datasets due to the fact that these datasets do not contain image-labels (they contain instead eye labels).

The present invention proposes a multi-task weakly-supervised method to train an image classifier using eye labels alone. The main advantage of this method is that it allows to use the existing stored screening data to train this model, avoiding the expensive task of annotating a new dataset from scratch. The performance of the method is comparable to human specialists at detecting a retinal condition and referable eye fundus images. The method is accurate not only at performing eye predictions, but also at image classification (i.e. detecting ungradable images).

The method for detecting a retinal condition from eye fundus images comprises the following steps:

- Receive, by an image classifier, one or more eye fundus images acquired from a same eye.
- Apply a same convolutional neuronal network on each eye fundus image to obtain a corresponding prediction.
- Apply a pooling function on the predictions to obtain a classification Y.
- Detect a retinal condition based on the classification Y.

The image classifier is trained using eye examination labels. To accomplish this goal, a weakly-supervised learning method is used in combination with a novel soft max pooling function to combine image predictions into eye classifications.

Most of the eye examinations contain two images centered in different anatomical structures of the retina, one centered in the optic disk and the other centered in the macula. When ophthalmologists grade an eye examination with an eye examination label (ground-truth label $\hat{Y}$; e.g. grade R0, R1, R2 or R3 when applied to diabetic retinopathy), they combine the information present in the two images. This implies that the eye examination label cannot be naively propagated to the individual images. One lesion may be visible in one image and hidden in the other, leading the ophthalmologist to grade the eye as containing a retinal condition (such as diabetic retinopathy), while one of the images is completely healthy.

A general method to train a machine learning model or deep learning image classifier includes (i) running the image classification model, (ii) comparing the prediction with the ground-truth, (iii) computing how to change the model's parameters so that the prediction is more similar to the ground-truth, and (iv) updating the model's parameters. The parameters of the model can be trained with an optimization method named Gradient Descent, although different known optimization techniques may also be employed in the training of the image classifier of the present invention. To reduce the noise and improve the optimization of the parameters, a batch of examples is used.

In the present invention, weakly supervised learning is used to train an image classifier using ground-truth eye labels $\hat{Y}$. A pre-trained state-of-the-art convolutional neuronal network model g is used to classify eye fundus images $x_i$ ($y_i = g(x_i)$). For instance, a Resnet50 pre-trained on Imagenet can be used as model g. Predictions $y_i$, or image labels, are treated as latent variables and the eye label Y is inferred using a pooling function f, $Y = f(y_1,... , y_N)$.

With this formulation, the method for detecting a retinal condition can deal with an arbitrary number of input images per eye. The only requirement is for the pooling function f to be differentiable in order to allow the gradient to be propagated into the image classifier. Then, the image classifier g can be trained by minimizing a classification loss, such as binary cross-entropy, on the predicted eye label Y using the ground-truth label $\hat{Y}$.

The pooling function f needs to be carefully selected in order to preserve the relationship between the images' predictions yi and the eye label Y. According to the Standard MIL (Multiple Instance Learning) Assumption, which states that an example is positive if at least one instance is positive and negative if all instances are negative, if an eye is labeled as containing signs of a retinal condition, such as diabetic retinopathy, then at least one image has to be classified as having diabetic retinopathy while, on the other hand, if the eye is diagnosed as healthy, all eye fundus images need to be classified as normal in order to minimize the classification loss. This assumption is usually modeled using the max pooling function *f*.

Max pooling works well on most situations where the Standard MIL Assumption holds; however, it is not fully differentiable. In practice this means that it takes longer to converge to a solution and it is more prone to fall in a local minimum. One of the reasons for max pooling to be prone to fall in local minima is the confirmation bias problem, where incorrect predictions in some data points are promoted and, thereby increasing the confidence of the model in those examples.

The novel soft max pooling function proposed in the present invention is fully differentiable without any additional hyper parameter. In the proposed pooling function the model's predictions $y_i$ are combined by means of a weighted average, where the weights are the actual predictions:

$$Y = \frac{\sum_i^N y_i y_i}{\sum_i^N y_i + \epsilon}$$

(1)

In the pooling function $\epsilon$ is a small constant in order to avoid divisions by 0 and N is the number of eye fundus images acquired from the eye to classify. In an embodiment, $\epsilon$ is lower than $10^{-5}$, preferably lower than $10^{-6}$, and more preferably included in the range of $[10^{-7}\text{-}10^{-6}]$.

As the weight of each prediction $y_i$ is proportional to the actual prediction $y_i$, higher predictions will have a larger weight and contribution to the output of the pooling function, while lower predictions will mostly be ignored. In the binary case, when the model's predictions tend to the extremes, the equation 1 reduces to max-pooling.

However, as the proposed pooling function of equation 1 is fully differentiable, it does not suffer from the same issues as max pooling. As every example $y_i$ contributes to the eye prediction Y, the model can recover from incorrect predictions stemming from bad model initializations, avoiding the confirmation bias problem.

The method of the present invention can deal with different number of input images (N in equation 1). An eye examination normally consists of two images from different views, one centered in the macula and the other in the optic disk. However, due to difficulties in the acquisition process, sometimes only one image or, more frequently, more than two images are obtained per eye. The method for detecting a retinal condition is able to work with an arbitrary number of input images as the image predictions are pooled into a single eye classification. For instance, once the model $g$ is trained, the image classifier can be provided with three images, which will obtain three predictions or image classifications ($y_1$, $y_2$ and $y_3$). Then, the pooling function is applied to these three image classifications to get the eye examination prediction (classification Y). The image classifier can also be provided with only one image; in that case (N=1), the pooling function simplifies to $y_i$. Therefore, in Equation 1 N is an integer equal or greater than 1 when applied to the method for detecting a retinal condition.

However, when the image classifier is being trained, the number of input images N per eye is preferably constrained to two images per eye for the following reasons:

- Hardware limitation: Early stage lesions are of a very small size and, therefore, eye fundus images must have enough resolution to represent them. In order to train a model capable of accurately detect a retinal condition, the input eye fundus images must be of at least 700 x 700px. This image resolution makes it harder to train large convolutional neuronal network models with large batch sizes, as only a small number of images can fit in the GPU memory. By limiting the number of images in a batch it becomes easier to manage the GPU memory.
- Additionally, it is good to have diverse examples in each training batch. Most optimization methods assume that the input distribution is independent and identically distributed, but eye fundus images from the same eye or patient are not independent. The same observation can be made for Batch Normalization, a layer present in many state-of-the-art convolutional neuronal networks, that also requires independent and identically distributed inputs. For this reason, two different batches are preferably created for each eye example at training time, one for each of the sampled images. This strategy makes sure that every image inside a batch comes from different eye examples, making it more likely that they are identically distributed inputs. For instance, if 8 pairs of images are used, two batches are created, each batch containing 8 images from different eyes.

Consequently, N=2 for the training of the image classifier. In case an eye example contains more than two eye fundus images, two images are randomly selected. On the other hand, if the eye example only contains one image, this image is simply duplicated to obtain two images per eye.

The model can be simultaneously trained to classify multiple tasks. For instance, when applied to diabetic retinopathy, the method may detect diabetic retinopathy (i.e. grade R1, R2 or R3), referability (i.e. grade R2 or R3) and quality in eye fundus images. Ideally, the information present in one task can be helpful to other tasks. For instance, features extracted by the model to solve the diabetic retinopathy detection task may be helpful to obtain better performance in the referability detection task. Furthermore, it is more efficient to have a single network that predicts multiple tasks rather than having multiple networks, one for each task.

The formulation is extended to a multi-task setting by pooling individual task predictions separately. More formally, model $g$ outputs a prediction vector $y_{ij}$, with one prediction for each task j. Then, the eye prediction can be obtained by pooling $y_{ij}$, $Y_j = f(y_{0j}, ..., y_{Nj})$.

The individual task losses are summed and minimized: $\mathcal{L} = \sum_j \mathcal{L}(Y_j, \widehat{Y}_j)$. Weights $k_j$ may be added to different tasks $j$ in order to increase/reduce the importance of a particular task.

Therefore, the method uses eye labels to train an image classifier for several tasks (such as detecting diabetic, referability and quality detection), and the novel soft max pooling function combines the image predictions into the eye classification.

**BRIEF DESCRIPTION OF THE DRAWINGS**

A series of drawings which aid in better understanding the invention and which are expressly related with an embodiment of said invention, presented as a non-limiting example thereof, are very briefly described below.

Figure 1 shows a flow diagram of a method for detecting a retinal condition according to the present invention.

Figure 2 is a flow diagram of a training method applied on the image classifier.

Figure 3 represents the step of obtaining a classification in the training method.

Figure 4 is a flow diagram of a training method applied on the image classifier trained to simultaneously classify multiple tasks.

Figure 5 schematically depicts the components of a system for detecting a retinal condition according to an embodiment of the present invention.

Figure 6A and 6B shows the performance of the method on the ARSN-Eye dataset and on the ARSN-Img dataset, respectively.

Figures 7A-7C depict the comparison of the present method on the diabetic retinopathy detection (Figure 7A), referability (Figure 7B) and quality detection (Figure 7C) tasks with three ophthalmologists.

**DETAILED DESCRIPTION**

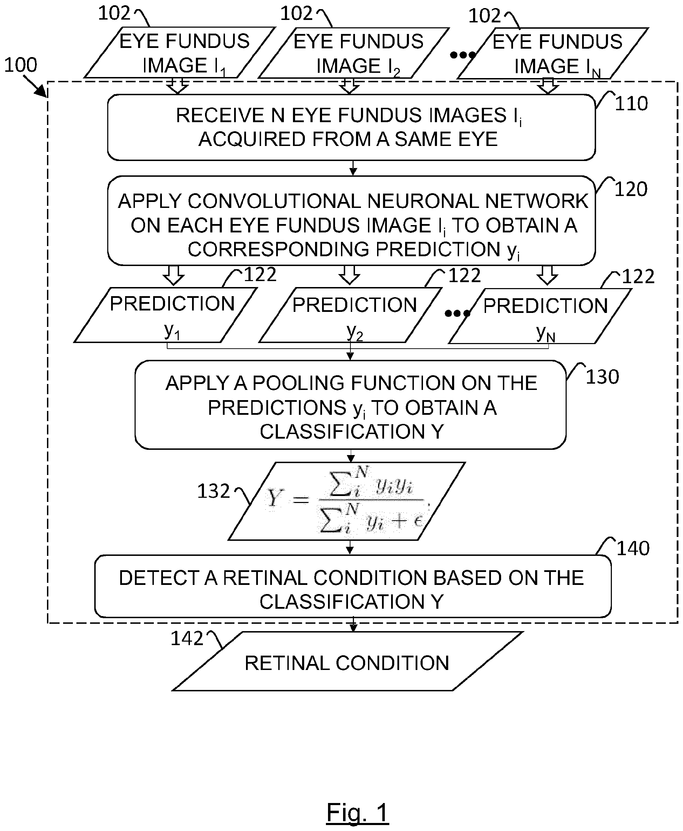

**Figure 1** depicts a flow diagram of a computer-implemented method 100 for detecting a retinal condition from eye fundus images according to an embodiment of the present invention.
The method 100 comprises receiving 110, by an image classifier, one or more eye fundus images 102 ($I_1$, $I_2$, ..., $I_N$) acquired from a same eye. A same convolutional neuronal network is then applied 120 on each eye fundus image 102 ($I_i$) to obtain a corresponding prediction 122 ($y_i$). The method 100 further comprises applying a pooling function 130 on the predictions 122 ($y_i$) to obtain a classification 132 ($Y$) defined as:

$$Y = \frac{\sum_i^N y_i y_i}{\sum_i^N y_i + \epsilon},$$

In the formula, $\varepsilon$ is a constant and N is the number of eye fundus images 102 ($I_i$) received. Based on the classification 132 ($Y$), a retinal condition 142 is detected 140. The detection of a retinal condition can also include detecting the absence of a retinal condition, for instance when no condition has been detected from the analysis of the eye fundus images (e.g. the retinal condition 142 may be "no retinal condition detected").

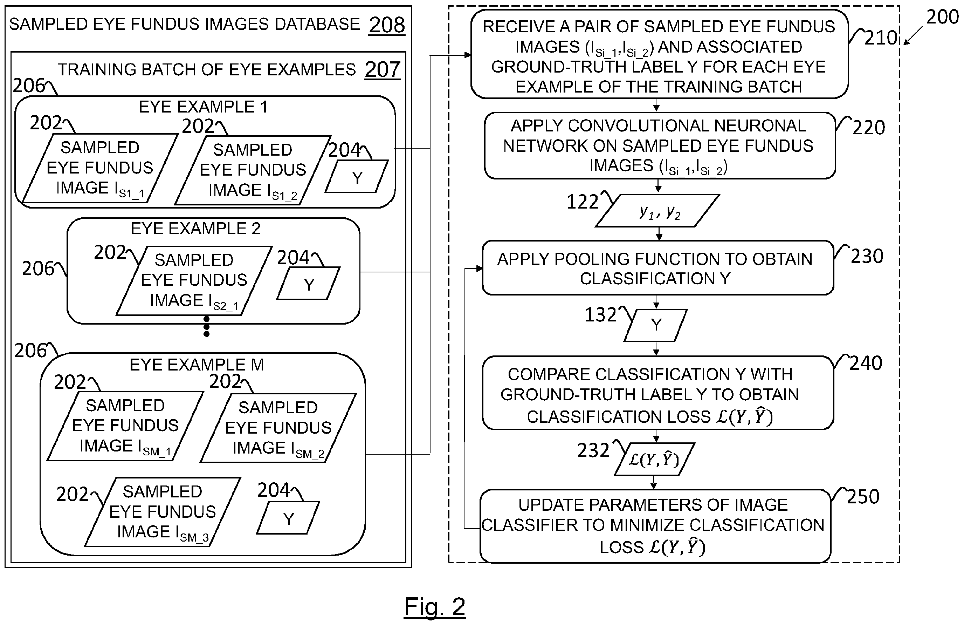

**Figure 2** represents a flow diagram of a training method 200 applied on the image classifier used in the method 100 for detecting a retinal condition of Figure 1. The image classifier is trained with at least one training batch 207 of eye examples stored on a sampled eye fundus images database 208. According to the example of Figure 2, the image classifier is trained with a single training batch 207 that includes M eye examples 206. Each eye example 206 comprises one or more sampled eye fundus images 202 ($I_{Si\_1}$, $I_{Si\_2}$, ...) and an associated ground-truth label 204 ($\hat{Y}$). The training is carried out by minimizing a classification loss $\mathcal{L}(Y, \hat{Y})$ applied on the classification 132 ($Y$) using the corresponding ground-truth label 204 ($\hat{Y}$).
The training method 200 comprises receiving 210 a pair of sampled eye fundus images ($I_{Si\_1}$, $I_{Si\_2}$) and associated ground-truth label 204 ($\hat{Y}$) for each eye example 206 of the training batch 207. The pair of sampled eye fundus images ($I_{Si\_1}$, $I_{Si\_2}$) are preferably retrieved from the sampled eye fundus images database 208; however, if there is only one sampled eye fundus image ($I_{Si\_1}$) available for an eye example 206, said sampled eye fundus image is duplicated to obtain a pair of sampled eye fundus images ($I_{Si\_1}, I_{Si\_2}$), with $I_{Si\_2} = I_{Si\_1}$. In the event that an eye example 206 stored on the sampled eye fundus images database 208 contains more than two eye fundus images ($I_{Si\_1}, I_{Si\_2}, I_{Si\_3}, ...$), two of said images are selected (e.g. randomly) to obtain a pair of sampled eye fundus images.

The training method 200 further comprises applying 220 the convolutional neuronal network on each image 202 of the pair of sampled eye fundus images ($I_{Si\_1}, I_{Si\_2}$), to obtain a corresponding prediction 122 ($y_1, y_2$), and applying 230 the pooling function (as defined in equation 1) on the prediction ($y_1, y_2$) to obtain a classification 132 ($Y$) of the pair of sampled eye fundus images ($I_{Si\_1}, I_{Si\_2}$) previously received 210. The classification Y (132) is then compared 240 with the corresponding ground-truth label $\hat{Y}$ (204) to obtain a classification loss 232 $(\mathcal{L}(Y, \hat{Y}))$. The parameters of the image classifier (e.g. weights of the hidden layers of the convolutional neuronal network) are iteratively updated 240 to minimize the classification loss 232 $(\mathcal{L}(Y, \hat{Y}))$.

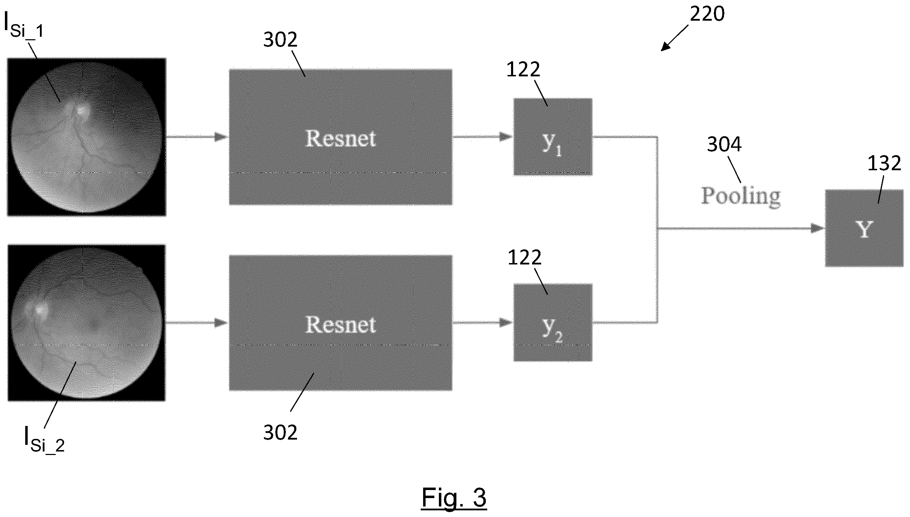

**Figure 3** represents the step of obtaining 220 a classification 132 (Y) of the pair of sampled eye fundus images ($I_{Si\_1}, I_{Si\_2}$) in the training method 200. A same convolutional neuronal network 302, which is not yet fully trained, is applied on each image ($I_{Si\_1}$ and $I_{Si\_2}$) of the pair of sampled eye fundus image to obtain a corresponding prediction 122 ($y_1$ and $y_2$). The convolutional neuronal network 302 of Figure 3 is the same as the one used in the method 100 of Figure 1, although in the process of training. A pre-trained model, such as a ResNet50 pre-trained on the Imagenet database, is preferably selected as the convolutional neuronal network 302 prior to the training of the image classifier.

A pooling function 304 is then applied to the predictions 122 ($y_1$, $y_2$) to obtain a classification 132 ($Y$). The pooling function 304 is the same described in the method 100 of Figure 1, in this particular case with N=2. The classification loss 232 is minimized and the parameters of the convolutional neuronal network 302 are updated 240 during the training process.

The ground-truth label 204 ($\hat{Y}$) is preferably an eye examination label. For instance:

- When the method is applied to detect diabetic retinopathy, a label indicating presence of diabetic retinopathy (including mild, moderate, severe and proliferative diabetic retinopathy), a label indicating a condition of diabetic retinopathy that requires treatment (including moderate, severe and proliferative diabetic retinopathy), a label indicating that the associated eye fundus images are ungradable, or a combination thereof. In this case, the step of detecting 140 a retinal condition may comprise detecting presence of diabetic retinopathy, detecting a condition of diabetic retinopathy that requires treatment, detecting ungradable images, or a combination thereof.

- When the method is applied to detect age-related macular degeneration, a label indicating presence of age-related macular degeneration (including early, intermediate or advanced AMD), a label indicating a condition of age-related macular degeneration that requires treatment (i.e. referable AMD including intermediate or advanced AMD), a label indicating that the associated eye fundus images are ungradable, or a combination thereof. In this case, the step of detecting 140 a retinal condition may comprise detecting presence of age-related macular degeneration, detecting a condition of age-related macular degeneration that requires treatment, detecting ungradable images, or a combination thereof.

- When the method is applied to detect diabetic macular edema, a label indicating presence of diabetic macular edema (including early and referable DME), a label indicating a condition of diabetic retinopathy that requires treatment (i.e. referable DME), a label indicating that the associated eye fundus images are ungradable, or a combination thereof. In this case, the step of detecting 140 a retinal condition may comprise detecting presence of diabetic macular edema, detecting a condition of diabetic macular edema that requires treatment, detecting ungradable images, or a combination thereof.

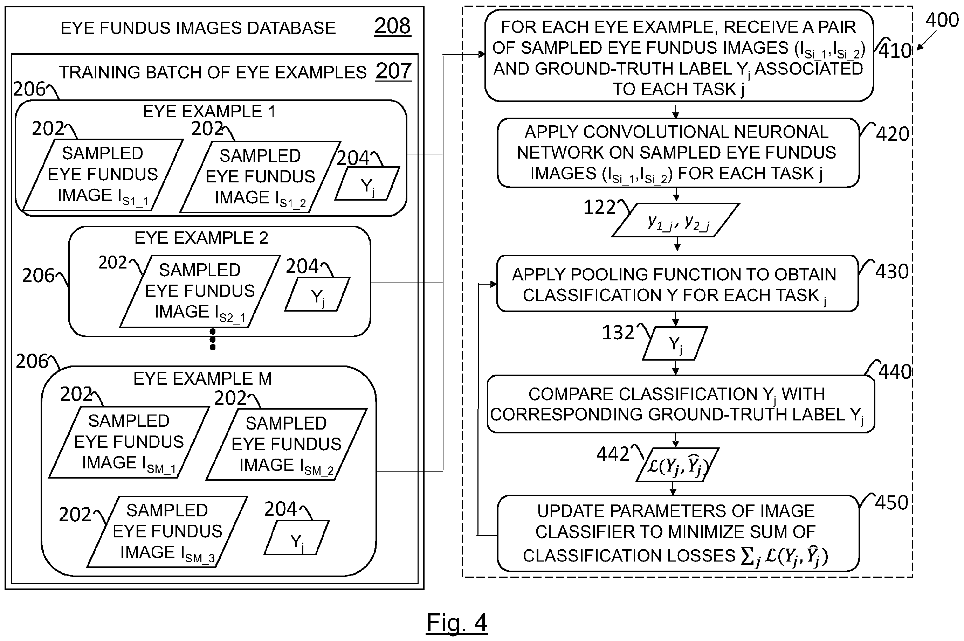

In the embodiment depicted in **Figure 4,** the image classifier is trained to simultaneously classify multiple tasks $j$. The tasks may include, when applied for instance to diabetic retinopathy, detecting the presence of diabetic retinopathy, detecting a condition of diabetic retinopathy that requires treatment, detecting ungradable images, or a combination thereof. In this embodiment the training method 400 comprises receiving 410, for each eye example 206, a pair of sampled eye fundus images ($I_{Si\_1}, I_{Si\_2}$) and a ground-truth label 204 ($\hat{Y}_j$) associated to each task $j$. For instance, the ground-truth label 204 may comprise $\hat{Y}_1$, associated to a first task of detecting presence of diabetic retinopathy, and $\hat{Y}_2$, associated to a second task of detecting ungradable images. Also, different retinal conditions can be treated as tasks $j$ on the multi-task setting. For example, the ground-truth label 204 may comprise $\hat{Y}_1$, associated to a first task of detecting presence of diabetic retinopathy, $\hat{Y}_2$, associated to a second task of detecting presence of age-related macular degeneration, and $\hat{Y}_3$, associated to a third task of detecting presence of diabetic macular edema. Any combination of the following tasks may be considered in the multi-task setting: image quality, DR detection, DR referable, AMD detection, AMD referable, DME detection and DME referable.

The training method 400 for simultaneously classifying multiple tasks also comprises applying 420 the convolutional neuronal network 302 on each image of the pair of sampled eye fundus images 202 ($I_{Si\_1}, I_{Si\_2}$) for each task $j$, to obtain a corresponding prediction 122 ($y_{1\_j}, y_{2\_j}$) for each task j. The pooling function 304 is applied on the predictions 122 ($y_{1\_j}, y_{2\_j}$) of each task $j$ separately to obtain 430 a classification 132 ($Y_j$) for each task $j$ (e.g. classification $Y_1$ associated to the first task of detecting presence of diabetic retinopathy, and classification $Y_2$ associated the second task of detecting ungradable images). For each task j, the classification $Y_j$ is compared 440 with the corresponding ground-truth label $\hat{Y}_j$ to obtain a classification loss 442 $\mathcal{L}(Y_j, \hat{Y}_j)$ for each task j.

Finally, the parameters of the image classifier are updated 450 by minimizing the sum of the classification losses $\sum_j \mathcal{L}(Y_j, \hat{Y}_j)$ applied on the classification $Y_j$ of the tasks $j$ using the corresponding ground-truth label $\hat{Y}_j$ associated to the *task j*. In an embodiment, the classification losses of the tasks $j$ are weighted $k_j$ when minimizing the sum of the classification losses $\sum_j k_j \mathcal{L}(Y_j, \hat{Y}_j)$.

The image classifier trained according to the training method 400 of Figure 4 is prepared to simultaneously classify multiple tasks (e.g. detect any combination of: presence of diabetic retinopathy, a condition of diabetic retinopathy that requires treatment, and ungradable images).

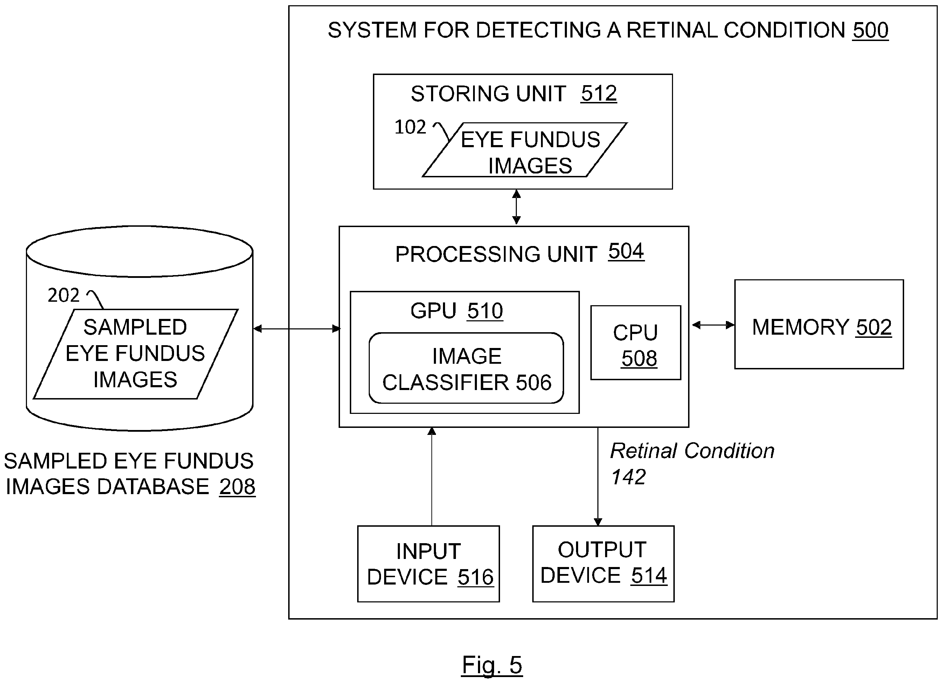

**Figure 5** is a schematic representation of a system 500 for detecting a retinal condition from eye fundus images according to an embodiment of the present invention. The system is configured to perform the steps of the method 100 and the training method (200,400) previously described.

The system comprises at least a memory 502 and a processing unit 504. The processing unit 504 implements the image classifier 506 described in the method. The computer program implementing the method, along with the parameters of the image classifier, are stored on the memory 502.

The processing unit may comprise a CPU and/or a GPU in charge of executing the method. In the embodiment of Figure 5, the processing unit 504 comprises a CPU 508 configured to load the model parameters (i.e. parameters of the image classifier) and run the program stored on the memory 502, and a GPU 510 configured to run the image classifier 506. Although the image classifier could be run instead in the CPU 508, using a GPU 510 would make the program much faster.

The system also may comprise, as shown in the embodiment of Figure 5, a storing unit 512, such as a hard disk drive or a USB flash drive, for storing the eye fundus images 102 to be analyzed by the image classifier 506 of the processing unit 504. The result of the classification (retinal condition 142 detected by the image classifier 506) is reported to an output device 514, such as a display or a monitor, configured to show the results to the users (normally, the doctors). The users may instruct the processing unit 504, by means of an input device 516 (e.g. mouse and keyboard), to start the detection process by selecting the specific eye fundus images 102 to analyze. The processing unit 504 may also be configured to access a sampled eye fundus images database 208 for the training of the image classifier 506. This database 208 may be an external component, not part of the system 500 itself (e.g. the database may be a public database remotely accessed through the Internet).

As previously indicated, the present invention obtains comparable results to ophthalmologists when classifying patient eyes and ungradable images. The method of the present invention has been evaluated on two private datasets collected by the Portuguese Health Authority of the Northern Region (ARSN): ARSN-Eye and ARSN-Img.

ARSN is the organization responsible for screening the diabetic population of the northern region of Portugal for signs of diabetic retinopathy. During the screening programme, eye fundus images are taken from diabetic patients and diagnosed by ophthalmologists. The diagnostic is performed for each eye of the patient and stored in a Picture Archiving and Communication System (PACS). The ARSN-Eye dataset gives access to 13500 eye examples, each of these consisting in one or more eye fundus images.

A subset of these images was extracted and provided to three ophthalmologists to grade 403 eye fundus images, forming the ARSN-Img dataset. From this dataset, 223 eye fundus images are of good quality, while the remaining 180 images are of partial or bad quality.

The image classifier was trained on a subset of ARSN-Eye and evaluated both on ARSN-Eye and ARSN-Img. The model was trained on 11256 eye examples, validated on 1368 examples and tested on 970 examples. The entire ARSN-Img dataset was used for evaluation purposes, wherein no image present in ARSN-Img is found in the train or validation sets of ARSN-Eye.

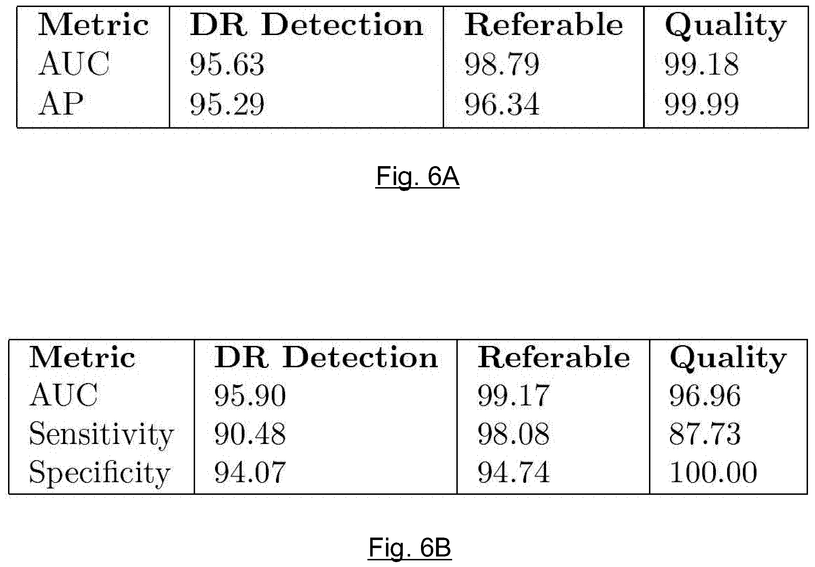

Regarding the eye prediction accuracy of the present method, the model was trained and tested on the ARSN-Eye dataset. Both Area Under the receiving operating Curve (AUC) and Average Precision (AP) were computed on the ARSN-Eye test set, obtaining high performance on the tasks of diabetic retinopathy detection, referability prediction and quality detection, as shown in the table of **Figure 6A.** On the diabetic retinopathy detection task, 95.63% AUC and 95.29% AP were obtained. Furthermore, the performance of the method on the referability task is even better. This is arguably the most important task since it signals the patients that are requiring treatment. In the referability task an AUC of 98.79% and an AP of 96.34% were obtained.

As regards the quality of the images, the image classier also correctly predicts image labels. The evaluated model corresponds to the model trained in the example of Figure 6A for the diabetic retinopathy detection and referability tasks. The good quality images from the ARSN-Img are selected and the model's predictions are compared with the ophthalmologists annotations. In order to properly evaluate the model for the quality detection task, some changes were made to the ARSN-Img ground-truth labels. While the model was trained on ARSN-Eye to find ungradable images, the ARSN-Img dataset contains labels for good, partial and bad quality images. The partial and bad quality classes are merged into a single class.

The image ground-truth label is defined as the median voting of the different ophthalmologists annotations. With a single ground-truth value for each image, it is possible to evaluate the model's performance. Even though the model was trained on eye annotations, it is capable of producing image predictions. Therefore, the AUC, sensitivity and specificity of the model on the ARSN-Img dataset was computed, as shown in the table of **Figure 6B.** When evaluated at the image level, the performance of the model is even slightly better than the performance at the eye level on the task of diabetic retinopathy detection and referability. As the ground-truth labels of the ARSN-Img are obtained by a median voting of three ophthalmologists, it is expected that it contains less errors. The model was able to obtain 95.90% AUC on the diabetic retinopathy detection task and 99.17% AUC on the referability task. However, the AUC on the quality task decreased to 96.96%. This can be explained by the fact that the quality labels in the ARSN-Eye and ARSN-Img datasets have slightly different meanings.

The British Diabetic Association has previously set the required screening standard for referring diabetic retinopathy of at least 80% sensitivity and 95% specificity. The present method is able to attain that standard with much higher sensitivity. In the particular case of a computer method that automatically refers patients to medical doctors, sensitivity is actually more important than specificity; in other words, it is preferable to have more false positives than false negatives, as the false positives will still be reviewed by medical doctors.

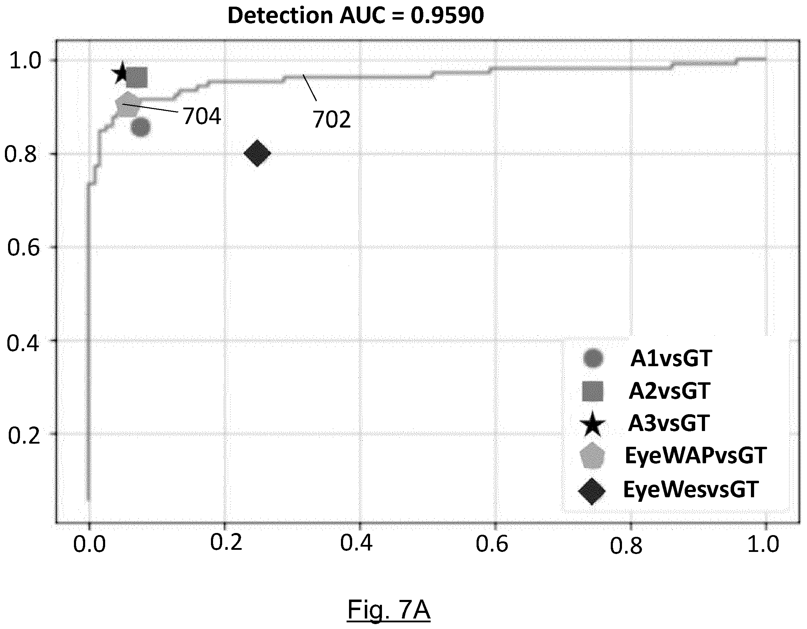

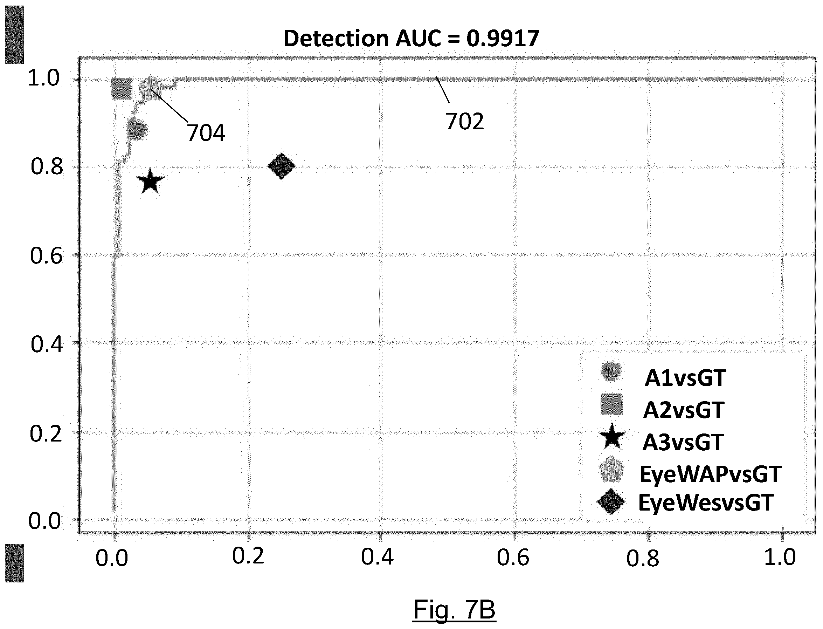

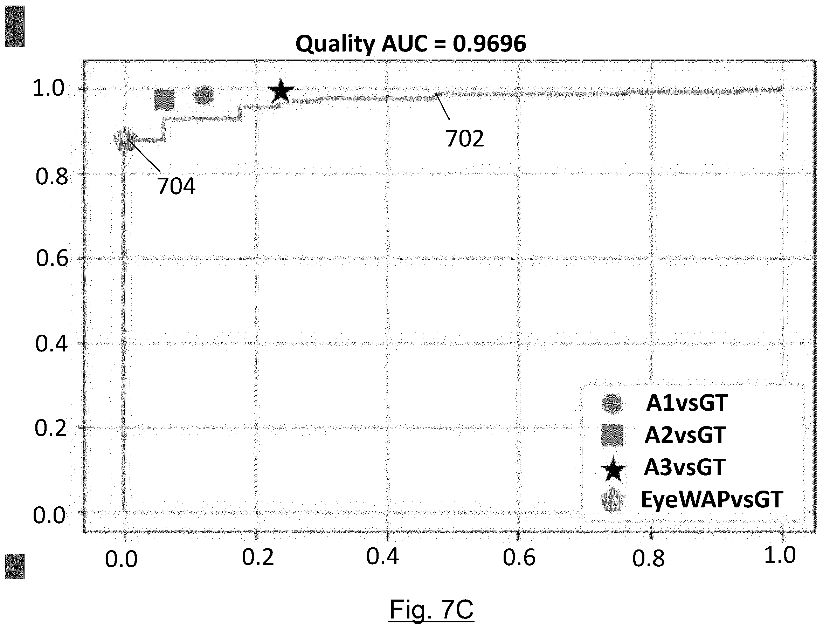

Finally, the present method is properly compared with the evaluation performed by the ophthalmologists. Medical doctors are not always in agreement with each other regarding the image grade. Therefore, each of the three ophthalmologists' grades are compare with the ground-truth, which is the median voting of the three ophthalmologists annotations. This allows to compute the specificity and sensitivity of each ophthalmologist on the same ground-truth labels as the method is being evaluated on. As can be seen in **Figures 7A-7C,** in which the performance of the image model is evaluated using a Receiving Operating Curve (ROC), the present method obtains better sensitivity and specificity points then at least one ophthalmologist in the diabetic retinopathy detection (Figure 7A) and referability tasks (Figure 7B), even though the model was only trained on eye labels. This shows that, by leveraging a large screening dataset, with eye exams labeled by different ophthalmologists, it is possible to train a robust model that performs comparably with a human specialist on a dataset with labeled images. The method also obtained good performance on the quality detection task (Figure 7C) even though the model was trained to detect ungradable eye exams, while at test time the model was evaluated to detect more subjective partial and bad quality images.

In Figures 7A-7C, the y-axis represents the sensitivity; the x-axis represents 1-specificity; "A1vsGT", "A2vsGT" and "A3vsGT" are, respectively, the performance of ophthalmologist 1, ophthalmologist 2 and ophthalmologist 3 with the result of the median voting (i.e. the ground-truth); "EyeWAPvsGT" is the result of the proposed model when compared with the ground-truth, in which the diagnosis of the medical doctors are compared with the same ground-truth used to evaluate the model; "EyeWesvsGT" is the result of a prior-art model [6]. As the y-axis represents the sensitivity and the x-axis represents 1-specificity, the point closer to the top left corner is the best performing one. The model makes a prediction $y_i$ for each image. This prediction lies in the range [0, 1]; for instance, for a particular image $y_i$ could be 0.25. However, for deciding whether an image contains diabetic retinopathy or not, these predictions need to be binarized using a threshold. A Receiving Operating Curve shows the performance of the model at each possible threshold. For instance, for a threshold of 0 all predictions $y_i > 0$ are considered as having diabetic retinopathy, and the sensitivity and specificity are computed. Then, the threshold is slightly increased by a really small value and the sensitivity and specificity are computed; this process is repeated until the threshold reaches the value 1. The line 702 represents the sensitivity and specificity for all the possible thresholds. The AUC (Area Under the receiving operating Curve), computes the area under the line 702. The higher the better, as it means that the line 702 is closer to the top left corner. To compute "EyeWAPvsGT", a threshold from the line 702 is selected as the "optimal" threshold, which corresponds to the point 704 of the line 702 closer to the top left corner, and the sensitivity and specificity of the model is reported for said point 704.

Therefore, after the model is trained and evaluated in two private datasets, one with eye labels and the second one with image labels annotated by three different ophthalmologists, it is concluded that the present method is not only able to accurately predict eye exam labels, but also image labels. The model is able to achieve the required referability screening performance in terms of sensitivity and specificity. In fact, it is able to obtain a much higher sensitivity than the required by the standard. Moreover, the method performs comparably to three ophthalmologists in the diabetic retinopathy and referable detection tasks while being trained on eye labels alone; in fact, the method obtained better performance than at least one ophthalmologist in these tasks when evaluated on a dataset with image labels.

**Claims**

1. A computer-implemented method for detecting a retinal condition from eye fundus images, the method (100) comprising:

   receiving (110), by an image classifier (506), one or more eye fundus images $I_i$ (102) acquired from a same eye;
   applying (120) a same convolutional neuronal network (302) on each eye fundus image $I_i$ (102) to obtain a corresponding prediction $y_i$ (122);
   applying (130) a pooling function (304) on the predictions $y_i$ (122) to obtain a classification $Y$ (132) of the one or more eye fundus images $I_i$ (102) defined as:

   $$Y = \frac{\sum_i^N y_i y_i}{\sum_i^N y_i + \epsilon},$$

   , wherein $\epsilon$ is a constant and N is the number of eye fundus images $I_i$ received; and
   detecting (140) a retinal condition (142) based on the classification $Y$ (132).

2. The computer-implemented method of claim 1, wherein the image classifier (506) is trained with at least one training batch (207) of eye examples, each eye example (206) comprising one or more sampled eye fundus images $I_{Si}$ (202) acquired from a same eye and an associated ground-truth label $\hat{Y}$ (204), and wherein the training is carried out by minimizing a classification loss $\mathcal{L}(Y, \hat{Y})$ (232) applied on the classification $Y$ (132) using the corresponding ground-truth label $\hat{Y}$ (204).

3. The computer-implemented method of claim 2, wherein the ground-truth label $\hat{Y}$ (204) is an eye examination label.

4. The computer-implemented method of claim 2 or 3, wherein the ground-truth label $\hat{Y}$ (204) is any of the following:

   a label indicating presence of diabetic retinopathy;
   a label indicating a condition of diabetic retinopathy that requires treatment;
   a label indicating presence of age-related macular degeneration;
   a label indicating a condition of age-related macular degeneration that requires treatment;
   a label indicating presence of diabetic macular edema;
   a label indicating a condition of diabetic macular edema that requires treatment;
   a label indicating that the associated eye fundus images are ungradable; or
   a combination thereof.

5. The computer-implemented method of any of claims 2 to 4, wherein the image classifier (506) is trained by:

   receiving (210), for each eye example (206), a pair of sampled eye fundus images $(I_{Si\_1}, I_{Si\_2})$ and an associated ground-truth label $\hat{Y}$ (204);
   applying (220) the convolutional neuronal network (302) on each image (202) of the pair of sampled eye fundus images $(I_{Si\_1}, I_{Si\_2})$, to obtain a corresponding prediction $(y_1, y_2)$;
   applying (230) the pooling function (304) on the predictions $(y_1, y_2)$ to obtain a classification $Y$ (132) of the pair of sampled eye fundus images $(I_{Si\_1}, I_{Si\_2})$;
   comparing (240) the classification $Y$ (132) with the corresponding ground-truth label $\hat{Y}$ (204) to obtain a classification loss $\mathcal{L}(Y, \hat{Y})$;

   updating (250) the parameters of the convolutional neuronal network (302) to minimize the classification loss

$$\mathcal{L}(Y, \widehat{Y}).$$

**6.** The computer-implemented method of any of claims 2 to 4, wherein the image classifier (506) is trained to simultaneously classify multiple tasks $j$ by:

receiving (410), for each eye example (206), a pair of sampled eye fundus images ($I_{Si\_1}, I_{Si\_2}$) and a ground-truth label $\widehat{Y}_j$ (204) associated to each task $j$;

applying (420) the convolutional neuronal network (302) on each image (202) of the pair of sampled eye fundus images ($I_{Si\_1}, I_{Si\_2}$) for each task $j$, to obtain a corresponding prediction ($y_{1\_j}, y_{2\_j}$) for each task j;

applying (430) the pooling function (304) on the predictions ($y_{1\_j}, y_{2\_j}$) of each task $j$ separately to obtain a classification $Y_j$ (132) for each task $j$;

comparing (440) the classification $Y_j$ (132) with the corresponding ground-truth label $\widehat{Y}_j$ (204) associated to the task $j$ to obtain a classification loss $\mathcal{L}(Y_j, \widehat{Y}_j)$ (232) for each task j;

updating (450) the parameters of the convolutional neuronal network (302) to minimize the sum of the classification losses $\sum_j \mathcal{L}(Y_j, \widehat{Y}_j)$ applied on the classification $Y_j$ of the tasks $j$.

**7.** The computer-implemented method of claim 6, wherein the classification losses (442) of the tasks $j$ are weighted $k_j$ in the step of minimizing the sum of the classification losses $\sum_j k_j \mathcal{L}(Y_j, \widehat{Y}_j).$

**8.** The computer-implemented method of any of claims 6 to 7, wherein the image classifier (506) is trained to simultaneously detect any combination of:

presence of diabetic retinopathy;
a condition of diabetic retinopathy that requires treatment;
presence of age-related macular degeneration;
a condition of age-related macular degeneration that requires treatment;
presence of diabetic macular edema;
a condition of diabetic macular edema that requires treatment; and
ungradable images.

**9.** The computer-implemented method of any of claims 5 to 8, wherein the step of receiving (210, 410) a pair of sampled eye fundus images ($I_{Si\_1}, I_{Si\_2}$) for each eye example (206) comprises retrieving, from a sampled eye fundus images database (208), a pair of sampled eye fundus images ($I_{Si\_1}, I_{Si\_2}$) for each eye example (206), and if there is only one sampled eye fundus image (202) available for an eye example (206), duplicating said sampled eye fundus image (202) to obtain a pair of sampled eye fundus images ($I_{Si\_1}, I_{Si\_2}$).

**10.** The computer-implemented method of any of claims 2 to 9, comprising selecting a pre-trained model as the convolutional neuronal network (302) prior to the training of the image classifier (506).

**11.** The computer-implemented method of any preceding claim, wherein detecting (140) a retinal condition (142) comprises:

detecting presence of diabetic retinopathy;
detecting a condition of diabetic retinopathy that requires treatment;
detecting presence of age-related macular degeneration;
detecting a condition of age-related macular degeneration that requires treatment;
detecting presence of diabetic macular edema;
detecting a condition of diabetic macular edema that requires treatment;
detecting ungradable images; or
a combination thereof.

**12.** A training method of an image classifier for detecting a retinal condition from eye fundus images, the training method (200) comprising:

receiving (210), for each eye example (206) of a training batch (207), a pair of sampled eye fundus images ($I_{Si\_1}$,$I_{Si\_2}$) acquired from a same eye and an associated ground-truth label $\hat{Y}$ (204);

applying (220) a convolutional neuronal network (302) of an image classifier (506) on each image (202) of the pair of sampled eye fundus images ($I_{Si\_1}$,$I_{Si\_2}$), to obtain a corresponding prediction ($y_1$,$y_2$);

applying (230) a pooling function (304) on the predictions ($y_1$,$y_2$) to obtain a classification $Y$ (132) of the pair of sampled eye fundus images ($I_{Si\_1}$,$I_{Si\_2}$) defined as:

$$Y = \frac{\sum_i^N y_i y_i}{\sum_i^N y_i + \epsilon};$$

, wherein $\epsilon$ is a constant and N is the number of eye fundus images $I_i$ received;

comparing (240) the classification Y (132) with the corresponding ground-truth label $\hat{Y}$ (204) to obtain a classification loss $\mathcal{L}(Y,\hat{Y})$;

updating (250) the parameters of the convolutional neuronal network (302) to minimize the classification loss $\mathcal{L}(Y,\hat{Y})$.

13. A training method of claim 12, wherein the image classifier (506) is trained to simultaneously classify multiple tasks $j$ by minimizing the sum of the classification losses $\sum_j \mathcal{L}(Y_j,\hat{Y}_j)$ applied on the classification $Y_j$ obtained separately for each of the tasks $j$.

14. A system for detecting a retinal condition from eye fundus images, comprising a memory (502) and a processing unit (504) configured to perform the computer-implemented method of any of claims 1 to 11 or the training method of any of claims 12 to 13.

15. A computer program product for detecting a retinal condition from eye fundus images, comprising at least one computer-readable storage medium having recorded thereon computer code instructions that, when executed by a processor, causes the processor to perform the computer-implemented method of any of claims 1 to 11 or the training method of any of claims 12 to 13.

**102** EYE FUNDUS IMAGE $I_1$    **102** EYE FUNDUS IMAGE $I_2$    •••    **102** EYE FUNDUS IMAGE $I_N$

**100**

**110** RECEIVE N EYE FUNDUS IMAGES $I_i$ ACQUIRED FROM A SAME EYE

**120** APPLY CONVOLUTIONAL NEURONAL NETWORK ON EACH EYE FUNDUS IMAGE $I_i$ TO OBTAIN A CORRESPONDING PREDICTION $y_i$

**122** PREDICTION $y_1$    **122** PREDICTION $y_2$    •••    **122** PREDICTION $y_N$

**130** APPLY A POOLING FUNCTION ON THE PREDICTIONS $y_i$ TO OBTAIN A CLASSIFICATION Y

**132**
$$Y = \frac{\sum_i^N y_i y_i}{\sum_i^N y_i + \epsilon}.$$

**140** DETECT A RETINAL CONDITION BASED ON THE CLASSIFICATION Y

**142** RETINAL CONDITION

Fig. 1

SAMPLED EYE FUNDUS IMAGES DATABASE 208

TRAINING BATCH OF EYE EXAMPLES 207

206

EYE EXAMPLE 1

202

SAMPLED EYE FUNDUS IMAGE $I_{S1\_1}$

202

SAMPLED EYE FUNDUS IMAGE $I_{S1\_2}$

204

Y

206

EYE EXAMPLE 2

202

SAMPLED EYE FUNDUS IMAGE $I_{S2\_1}$

204

Y

206

EYE EXAMPLE M

202

SAMPLED EYE FUNDUS IMAGE $I_{SM\_1}$

202

SAMPLED EYE FUNDUS IMAGE $I_{SM\_2}$

204

Y

202

SAMPLED EYE FUNDUS IMAGE $I_{SM\_3}$

204

Y

200

RECEIVE A PAIR OF SAMPLED EYE FUNDUS IMAGES ($I_{Si\_1}$,$I_{Si\_2}$) AND ASSOCIATED GROUND-TRUTH LABEL Y FOR EACH EYE EXAMPLE OF THE TRAINING BATCH 210

APPLY CONVOLUTIONAL NEURONAL NETWORK ON SAMPLED EYE FUNDUS IMAGES ($I_{Si\_1}$,$I_{Si\_2}$) 220

122 $y_1, y_2$

APPLY POOLING FUNCTION TO OBTAIN CLASSIFICATION Y 230

132 Y

COMPARE CLASSIFICATION Y WITH GROUND-TRUTH LABEL Y TO OBTAIN CLASSIFICATION LOSS $\mathcal{L}(Y,\widehat{Y})$ 240

232 $\mathcal{L}(Y,\widehat{Y})$

UPDATE PARAMETERS OF IMAGE CLASSIFIER TO MINIMIZE CLASSIFICATION LOSS $\mathcal{L}(Y,\widehat{Y})$ 250

Fig. 2

Fig. 3

_Fig. 4_

# SYSTEM FOR DETECTING A RETINAL CONDITION 500

**STORING UNIT 512**

102 — EYE FUNDUS IMAGES

**PROCESSING UNIT 504**

**GPU 510**

IMAGE CLASSIFIER 506

CPU 508

MEMORY 502

202 — SAMPLED EYE FUNDUS IMAGES

SAMPLED EYE FUNDUS IMAGES DATABASE 208

*Retinal Condition 142*

INPUT DEVICE 516

OUTPUT DEVICE 514

<u>Fig. 5</u>

| Metric | DR Detection | Referable | Quality |
|--------|--------------|-----------|---------|
| AUC | 95.63 | 98.79 | 99.18 |
| AP | 95.29 | 96.34 | 99.99 |

Fig. 6A

EP 3 944 185 A1

| Metric | DR Detection | Referable | Quality |
|--------|--------------|-----------|---------|
| AUC | 95.90 | 99.17 | 96.96 |
| Sensitivity | 90.48 | 98.08 | 87.73 |
| Specificity | 94.07 | 94.74 | 100.00 |

Fig. 6B

**Detection AUC = 0.9590**

Legend:
- A1vsGT
- A2vsGT
- A3vsGT
- EyeWAPvsGT
- EyeWesvsGT

Fig. 7A

EP 3 944 185 A1

**Detection AUC = 0.9917**

Fig. 7B

Quality AUC = 0.9696

702

704

A1vsGT
A2vsGT
A3vsGT
EyeWAPvsGT

Fig. 7C

**EP 3 944 185 A1**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | COSTA PEDRO ET AL: "A Weakly-Supervised Framework for Interpretable Diabetic Retinopathy Detection on Retinal Images", IEEE ACCESS, vol. 6, 15 March 2018 (2018-03-15), pages 18747-18758, XP011681560, DOI: 10.1109/ACCESS.2018.2816003 [retrieved on 2018-04-16] * abstract; figures 3, 4; table 1 * * page 18750, right-hand column, paragraph 1 * * page 18751, left-hand column, paragraph 2-6 * * page 18751, right-hand column, paragraph 1-4 * * page 18752, right-hand column, paragraph 4 * * page 18753, right-hand column, paragraph 1 * * page 18756, left-hand column, paragraph 2-3 * | 1-5,9-15 | INV. G06T7/00 |
| A | ----- US 2019/110753 A1 (ZHANG KANG [US] ET AL) 18 April 2019 (2019-04-18) * the whole document * ----- -/-- | 1-15 | TECHNICAL FIELDS SEARCHED (IPC) G06T |

The present search report has been drawn up for all claims

| Place of search | Date of completion of the search | Examiner |
|---|---|---|
| Munich | 13 January 2021 | Rodes Arnau, Isabel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 20 18 8078

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YUN WANG ET AL: "A Comparison of Five Multiple Instance Learning Pooling Functions for Sound Event Detection with Weak Labeling", ICASSP 2019 - 2019 IEEE INTERNATIONAL CONFERENCE ON ACOUSTICS, SPEECH, AND SIGNAL PROCESSING : PROCEEDINGS : MAY 12-17, 2019, BRIGHTON CONFERENCE CENTRE, BRIGHTON, UNITED KINGDOM, 1 May 2019 (2019-05-01), pages 31-35, XP055763644, US DOI: 10.1109/ICASSP.2019.8682847 ISBN: 978-1-4799-8131-1 * the whole document * | 1-15 | |
| A | STOLTE SKYLAR ET AL: "A survey on medical image analysis in diabetic retinopathy", MEDICAL IMAGE ANALYSIS, OXFORD UNIVERSITY PRESS, OXOFRD, GB, vol. 64, 30 May 2020 (2020-05-30), XP086219037, ISSN: 1361-8415, DOI: 10.1016/J.MEDIA.2020.101742 [retrieved on 2020-05-30] * the whole document * | 1-15 | TECHNICAL FIELDS SEARCHED (IPC) |

The present search report has been drawn up for all claims

| Place of search | Date of completion of the search | Examiner |
|---|---|---|
| Munich | 13 January 2021 | Rodes Arnau, Isabel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 18 8078

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2021

| Patent document cited in search report | Publication date | Patent family member(s) | Publication date |
|---|---|---|---|
| US 2019110753 A1 | 18-04-2019 | AU 2018347610 A1 | 07-05-2020 |
| | | CA 3083035 A1 | 18-04-2019 |
| | | EP 3695416 A1 | 19-08-2020 |
| | | SG 11202003337V A | 28-05-2020 |
| | | US 2019110753 A1 | 18-04-2019 |
| | | WO 2019075410 A1 | 18-04-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **V GULSHAN ; L PENG ; M CORAM ; MC STUMPE ; D WU ; A NARAYANASWAMY ; S VENUGOPALAN ; K WIDNER ; T MADAMS ; J CUADROS.** Development and Validation of a Deep Learning Algorithm for Detection of Diabetic Retinopathy in Retinal Fundus Photographs. *JAMA,* 2016, vol. 316 (22), 2402, , 12
- **M D ABRAMOFF ; Y. LOU ; A. ERGINAY ; WARREN CLARIDA ; RYAN AMELON ; JAMES C. FOLK ; MEINDERT NIEMEIJER.** Improved Automated Detection of Diabetic Retinopathy on a Publicly Available Dataset Through Integration of Deep Learning. *Investigative Opthalmology & Visual Science,* 2016, vol. 57 (13), 5200
- **G QUELLEC ; G CAZUGUEL ; B COCHENER ; M LAMARD.** Multiple-Instance Learning for Medical Image and Video Analysis. *IEEE Reviews in Biomedical Engineering,* 2017, vol. 10, 213-234
- **RISHAB GARGEYA ; THEODORE LENG.** Automated Identification of Diabetic Retinopathy Using Deep Learning. *Ophthalmology,* 2017, vol. 124 (7), 962-969
- **BOLEI ZHOU ; ADITYA KHOSLA ; AGATA LAPEDRIZA ; AUDE OLIVA ; ANTONIO TORRALBA.** *Learning Deep Features for Discriminative Localization,* 2015, 2921-2929
- Eyewes: weakly supervised pre-trained convolutional neural networks for diabetic retinopathy detection. **PEDRO COSTA ; TERESA ARAÚJO ; GUILHERME ARESTA ; ADRIAN GALDRAN ; ANA MARIA MENDONÇA ; ASIM SMAILAGIC ; AURÉLIO CAMPILHO.** In 2019 16th International Conference on Machine Vision Applications (MVA). IEEE, 2019, 1-6
- Eyequal: Accurate, explainable, retinal image quality assessment. **PEDRO COSTA ; AURELIO CAMPILHO ; BRYAN HOOI ; ASIM SMAILAGIC ; KRIS KITANI ; SHENGHUA LIU ; CHRISTOS FALOUTSOS ; ADRIAN GALDRAN.** In 2017 16th IEEE International Conference on Machine Learning and Applications (ICMLA). IEEE, 2017, 323-330